(19) Europäisches Patentamt

European Patent Office

Office européen des brevets

(11) **EP 1 626 303 A1**

(12) **EUROPEAN PATENT APPLICATION**
published in accordance with Art. 158(3) EPC

(43) Date of publication:
**15.02.2006 Bulletin 2006/07**

(51) Int Cl.:
*G02B 27/42* (1980.01)    *G21K 1/00* (1968.09)

(21) Application number: **03715872.2**

(22) Date of filing: **06.02.2003**

(86) International application number:
**PCT/RU2003/000038**

(87) International publication number:
**WO 2004/063793 (29.07.2004 Gazette 2004/31)**

(84) Designated Contracting States:
**AT BE BG CH CY CZ DE DK EE ES FI FR GB GR HU IE IT LI LU MC NL PT SE SI SK TR**

(30) Priority: **09.01.2003 RU 2003100062**

(71) Applicant: **Ashkinazy, Yakov Mikhailovich Moscow, 103001 (RU)**

(72) Inventors:
• **Schetnikov, Anatoly Alekseevich Moskovskaya obl., 142100 (RU)**
• **Ashkinazy, Yakov Mikhailovich Moscow, 103001 (RU)**
• **Cheglakov, Andrei Valerievich Moscow, 119034 (RU)**

(74) Representative: **Zellentin, Rüdiger Patentanwälte Zellentin & Partner Zweibrückenstrasse 15 80331 München (DE)**

(54) **METHOD FOR FOCUSING A WAVE FIELD AND DEVICE FOR CARRYING OUT SAID METHOD**

(57)    The invention relates to methods and means for focusing radiation of any nature and spectrum. Beams (2) and (2') extracted from a wave field (WF) are deflected at predefined angles in two sequential sections (S) (3) and (4) of the WF by means of ordered sets consisting of equal number of similar focusing elements (FE) (5, 6) which are symmetrically disposed in said S3 and S4 in such a way that an invariance is obtained in relation to the rotation around an axis (7) which passes through the centres of the sections C3 and C4. The module and the orientation of the angle of deflection of the beams (2, 2') are consistently modified, thereby ensuring the proportionality of a meridional component with respect to a distance between the beam (2, 2') and the centre (0, 0') of the C3 and C4. Acting apertures of the focusing elements (5, 6) are limited by segments of arc distributed along the C3 and C4 with a constant angular pitch. Two ordered sets consisting of equal number of the focusing elements (5, 6) form input and output apertures (9,10) exhibiting focusing symmetry characteristics with the aid of the acting apertures (5, 6) thereof.

Fig. 1

# Description

## Backgraund of the invention

The Invention relates to field of optics, and is more concrete - to methods and tools of focusing of an electromagnetic radiation of any nature and a spectrum (including, ultrasonic waves and a X-ray), i.e., radiation, which is spread on various physical media, including vacuum. It is the more preferable to use the stated invention for a hard X-ray focusing, for example, at an Earth orbit launching X-ray telescopes.

## Description of the prior art

The techniques known from a level methods of an electromagnetic radiation focusing are comprehensible to rather narrow spectrum of waves and extremely are not desirable from the technological point of view for X-ray focusing. In particular, said methods and tools of focusing of X-ray focusing are using a plurality of mirrors fulfilled of a thin metal foil with a coating of platinum, gold, ruthenium or other cost-intensive substances; or may be fulfilled of natural crystals with the perfect structure which parameters are commensurable with a wave length of X-ray radiation and diffraction angles of an incident electromagnetic radiation defined by Bragg law (that restricts their use in wide scales for economic reasons). Also, some methods and tools are using multilayer coatings, and each layer should possess strictly regulated excellent one from another refraction index of substrates (that restricts their use in wide scales for technological reasons, so there is a necessity of selection of substrates, depending on an incidence angle and a spectrum of an electromagnetic radiation).

Now in reflective optics for X-ray focusing there are using grazing incidence aspherical mirrors. So to minimize a spherical aberration in case of one mirror, it is possible to use an elliptic mirror. However, it does not eliminate an astigmatism, therefore the sourse should be in one of ellipsoide focal points, while its image will be formed in another focal point.

Methods of improving of image quality include surfaces shaping with small deviations from the parabolic shape, enabling to reduce an inclination of an image field at small growth of a spherical aberration. Calculations show, that the optimum mirror should have a surface of the third order. But the coma cannot be corrected only by one surface of any shape. Besides as the shape of a surface becomes more and more complicated, tolerances at its manufacture become more and more rigorous and manufacture of such mirrors on a large scale becomes as economically, and technologically ineffective.

Thus, techniques known from a level methods and tools of X-ray focusing are in most cases grounded on use of effect of the total external reflection at grazing incidence of rays on a reflecting surface or a wave field diffraction on space lattices or multilayer coatings. Unfortunately, the significant aberrations originating at grazing incidence of beams on a spherical surface of a mirror do not allow to ensure good focusing. Besides use of individual mirrors for focusing is inexpedient by virtue of restrictions of their useful aperture and a field of view. For these reasons the composite systems fulfilled in the form of ordered sets of focusing elements are more effective in real up-to-date systems of a grazing incidence.

Composite systems, in which radiation at a grazing incidence (i.e., under very vanishing angles) is reflected from two and more spherical or aspherical surfaces are divided into two types. The first type known as Kirkpatrick - Baez systems has two mirrors which meridional planes are crossed. The second type known as Wolter systems uses combinations of coaxial and confocal reflectors of conic sections.

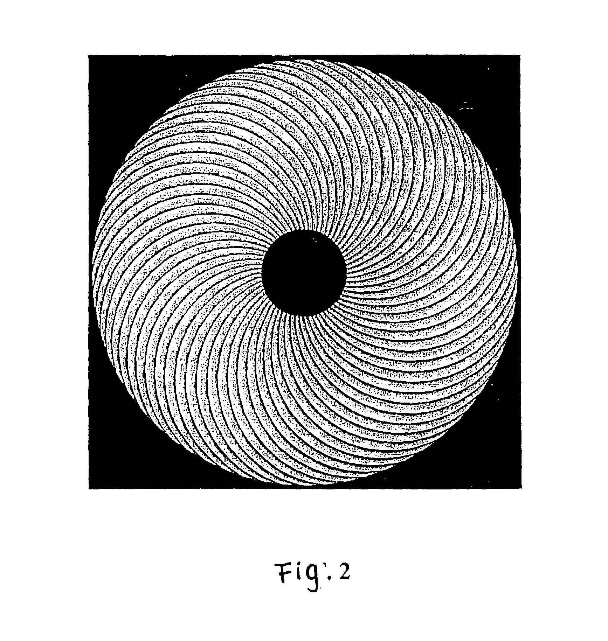

The Elementary Kirkpatrik-Baez system consists of two cylindrical mirrors with equal radiuses of curvature and formes the real point image of pointwise source, and consequently, the real stretched image of an extended object. Thus, it corrects an astigmatism. In practice it is possible to use as well spherical mirrors as the sagittal focal distance much more exceeds meridional (A.Mishett, « Soft X-ray Optics», Moscow, "MIR", 1989., pp.66-67, fig.2.13).

However such simple optical system possesses other type of aberrations - anamorphism. As the positions of two mirrors do not coincide, the distance up to source at the meridional section from the first mirror is less, than at sagittal section from the second mirror. Thus, coefficients of magnification in two crossly perpendicular directions are various. To eliminate this appearance in practice it is possible in several ways: mounting the receiver under an angle to a perpendicular to an optical axis or applying the third mirror arranged in the same plane, as first. However it complicates system both in the constructive map, and from the technological point of view. Basically it is theoretically possible to develop an optical system in which both mirrors are arranged on equal distance from source (in the same position fig. 2.14). However such type of system is very difficult for making from the technological point of view.

Kirkpatrick - Baez systems can be constructed in such a manner that the coma appears largely corrected. But for this purpose it is necessary to use, at least, two pairs of the crossed mirrors. These systems should be developed so that in them Abbe sine condition would be fulfilled, that is equivalent to the demand, that all geometrical paths through an optical system give equal coefficient of magnification. However the specified requirement cannot be fulfilled at one reflection from a two-dimensional mirror. For realization of Abbe sine condition it is necessary two reflections so in three-dimensional system of Kirkpatrick-Baez it is necessary to ensure four reflections, on two each direction (see in the same place p.68, fig.2.15). But even in this case it is impossible to eliminate completely to that at use of spherical mirrors - for this purpose use of aspherical mirrors is necessary.

Thus, Kirkpatrick - Baez systems can be constructed so, that aberrations at a grazing incidence of rays appreciably are cancelled. But as a rule for security of this problem it is required to apply complicated optical systems without lapses of the geometrical shape of reflectors and cross deviations of composite systems.

In practice it is preferable the Wolter type systems. This systems use well-known properties of conicoids to shape the image (see in the same place, pp. 69-70) which are illustrated on fig.2.16. By means of sequential reflections from two sections of such surfaces very tall quality imaging can be gained. For the type I system, reflections are off the internal surface of a paraboloid and hyperboloid (fig.2.17), while in type II system the first reflection happens on internal, and secondary - off the external surface of a hyperboloid (fig.2.18), and in type III system on the contrary: the first reflection - off the external surface, and second - on internal (fig. 2.19).

There isn't an astigmatism and a spherical aberration in such systems owing to a rotational symmetry for the rays transiting through a focal point, thus Abbe sine condition is fulfilled with a split-hair accuracy and the coma is rather small. The coma can be eliminated completely in the modified Wolter system (i.e., Wolter -Shvartshild system) having grouped two coaxial surfaces so that Abbe sine condition was exactly fulfilled. Wolter has applied this method to systems of a grazing incidence and has considered small deviations from the shape of conicoids. Elimination of a coma gives matching improving a solution.

The spatial resolution of focusing systems of a grazing incidence worsens for off-axis points of the image. There are not simple analytical computational methods for this systems and ray tracing methods are usually applied. That is also one of lacks of these systems.

Besides at an estimate of performances of real optical systems of a grazing incidence and the effects related to the superficial grains and considered above, it is necessary to take into consideration such factors, as lapses of the shape of surfaces and cross deviations of the composite systems. Thus it is necessary to consider, that each mirror of a composite optical system have strictly individual shape that does inexpedient use of such systems in large-scale manufacture of matching focusing systems both in technological, and in the economic relations.

As the closest declared subjects of the invention "method" is the method of wave field focusing, consisting in the following:

> beams, extracted from a wave field (emitted by a certain radiation source) are deflected at predetermined angles, at least in two sequential sections of the wave field by means of ordered sets consisting of equal number of similar focusing elements which are symmetrically disposed in said sections in such a way that an invariance is obtained in relation to the rotation around an axis which passes through the centres of the sections. (A.Mishett, « Soft X-ray optics», "MIR", 1989, pp.287-289, fig.10.276; US Pat 6285737 B1, 2001.)

As the closest declared subjects of the invention "device" is the wave field focusing device, containing, at least two ordered sets (following one after another), consisting of equal number of focusing elements, configured to form by its acting subapertures input and output apertures of rotational symmetry (A.Mishett, « Soft X-ray optics», "MIR", 1989, pp.287-289, fig.10.276; US Pat 6285737 B1, 2001.)

This technique solutions carry the same disadvantages (both regarding to the method and to the device) as attributed to the previously analyzed Wolter type focusing systems of grazing incidence. In particular it is necessary to underline, that each focusing elements (the elemental subaperture) of mentioned ordered sets in the given composite optical system should be not only strictly spatially oriented in the sets, but also must be fulfilled with certain strictly individual shape that complicates a construction of system as a whole and, accordingly, processing technique of its manufacture and use.

In addition to above mentioned the incident angles of beams are consistently varied from centre to a rim of the focusing device. So the reflectivity, an effective aperture and the performances of the focusing system as a whole are therefore varied. To improve a performance it is necessary to superimpose a multilayer coating on each focusing elements, thus thickness of each layer of this coating should be chosen individually for each of the mentioned elements. That is, must to vary aside diminutions from centre of an optical system to its rim and from an input to output apertures. If is known of a level of technique that if the system configured of crystalline substances than parameters of its crystal structure should be varied (i.e., with variations in atomic lattices). Hence, such systems from the technological point of view are comprehensible only to their individual fulfilment and cannot be used in wide scales as economically inexpedient.

**Summary of the invention**

The basis of the declared invention has been formed by the problem of creating of such wave field focusing method and also the device for its industrial embodying by means of which, alongside with dilation of a scope, it would turn out a possibility of use to focusing an electromagnetic radiation of any nature and spectrum, improvement of a focusing quality, adaptability to manufacture and simplification of a device design due to use in it the identical focusing elements, forming the input and output apertures. So it allows to use the declared invention in various fields of a science and technique and in wide scales.

The problem put with the reference to the "method" subject of the invention is being realized as follows.

The method of a wave field focusing, conforming to which, beams, extracted from a wave field (emitted by a certain radiation source) are deflected at predetermined angles, at least in two sequential sections of the wave field by means of ordered sets consisting of equal number of similar focusing elements which are symmetrically disposed in said sections in such a way that an invariance is obtained in relation to the rotation around an axis which passes through the centres of the sections, **wherein**, in each above-stated sections the module and the orientation of the deflection angle of the beams are consistently modified, thereby ensuring the proportionality of a meridional component with respect to a distance between the beam and the centre of the sections by means of identical focusing elements and its acting apertures are limited by segments of arc, distributed along the sections with a constant angular pitch.

It is admissible to focusing with a constant module of the deflection angle of the beams in each above-stated sections.

Also it is possible to focusing with a constant phase delay of the beams between the selected sections.

Also it is possible to focusing with a constant nonzero phase delay of the beams between the selected sections, forming in space between sections the intermediate focal point of the ring shape with a centre on the rotational symmetry axes, so, that the acting apertures of focusing elements of the first and second selected sections are optically mapped against each other by means of the additional ordered sets of the focusing elements, located near to the intermediate focal point and coordinates of rays in the first and second sections are satisfied a requirement:

$$(\rho_{1/R1})\,2 + (\rho_{2/R2})\,2 = 1,$$

where:

$\rho_1$ and $\rho_2$ - polar coordinates of rays in the first and second sections, accordingly;

R1 and R2 - radiuses of the input and output apertures in the first and second sections, accordingly.

Resonably, that in the field of the intermediate focal point converse amplitude and-or a phase, and-or frequency, and-or the nature of a wave field.

In the latter case (with a view of travelling field) expediently beforehand to focusing the wave field on a reflective surface, perpendicular to a direction of its travelling, and then to realize focusing a mirrored component of a reflected beam by a declared method with a longitudinal magnification equal to $0.5\omega_1/\omega_2$ (where "$\omega_1$ and $\omega_2$" are radiation frequencies before the mentioned transformation), thus the focusing wave field on the specified smooth surface in a direction of its initial travelling is necessary to guide matching frequencies.

The problem put with the reference to the "device" subject of the invention is being realized as follows.

The wave field focusing device, containing at least two ordered sets of equal number of the similar focusing elements, which are symmetrically disposed in said sets and form by its acting subapertures input and output apertures in such a way that an invariance is obtained in relation to the rotation around an axis which passes through the centres of the apertures, **wherein,** each of the specified sets is generated of the identical focusing elements, distributed along the specified apertures with a constant angular pitch and its acting subapertures are limited by segments of arc, configured so, that the meridional component of the deflection angle of the beams extracted from the wave field by local area of acting subaperture is proportional to a distance between the beam and the centre of the matching aperture.

It is admissible the specified sets of focusing elements to fulfill from refractive focusing elements, from waveguide focusing elements, from reflecting focusing elements or from diffractive focusing elements.

Optimum acting subapertures of the focusing elements to restrict to arcs of circles which centres are drifted from an axis of a rotational symmetry in the same direction, as focusing elements, on a constant, equal to radius of these arcs.

In the latter case expediently operating apertures of focusing elements to restrict to arcs, coaxial to focalizing devices.

## Brief description of the drawings.

Fig.1 - the schematic diagram of the wave field focusing device in an axonometry (input and output apertures are conventionally restricted by shaped closed curves in the form of ellipses, and the focusing elements /an acting subapertures/ input and output apertures are conventionally shown in a singular).

Fig.2 - the real shape of an input aperture of (by way of) the wave field focusing device.

Fig.3 - the image of pointwise sourse in a focal point of an optical system (i.e., the wave field focusing device) is shown.

Fig.4 - the image spatially an extended object in a focal point of an optical system (i.e., the wave field focusing device) is shown.

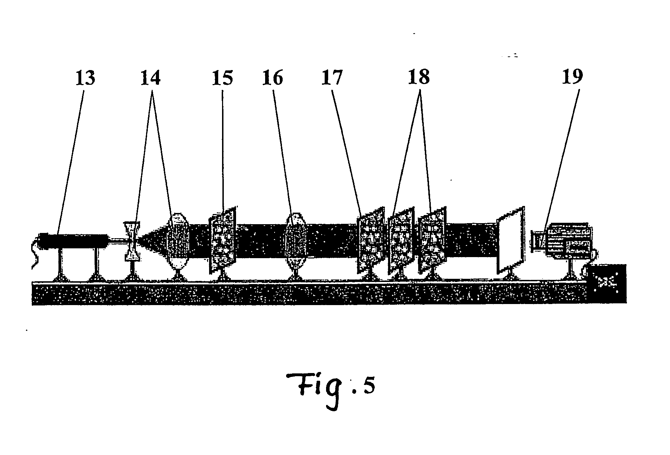

Fig.5 - the basic circuit of an optical system for numerical modeling, on the basis of which calculation of shaped images (Fig.3 and Fig.4) various radiation sources is yielded.

## Best variant of the invention implementation

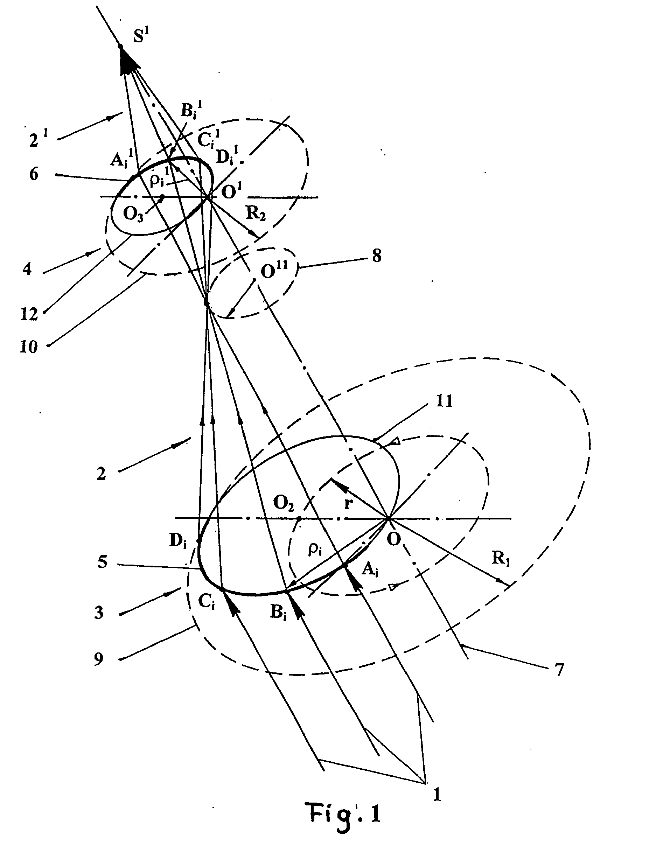

Phisical principle of realization of the patented method of wave field focusing consists of the followings (Fig.1).

From a undular field 1 (emitted by a certain radiation source) select rays 2 and decline these rays 2 on the focusings set from a requirement angles. The mentioned allotment and a deflexion of rays 2 realize, at least, in two, following one after another cuts 3 and 4 undular fields 1, by means of the ranked gangs from equal number of focalizing devices 5 and 6, allocated in specified cuts 3 and 4, accordingly, with security of an invariance (i.e., a rotational symmetry) concerning a rotation about an axis 7 rotational symmetries, transiting through centres About and O1 mentioned cuts 3 and 4. Thus, in each above-stated cut 3 and 4 concordantly change the module and a direction of an angle of deflection of rays 2 and 21, accordingly, ensuring proportionality of their meridional components to distances $\rho_i$ and $\rho_{i1}$ From rays 2 and 21 up to centres About and O1 these cuts 3 and 4, accordingly. The given requirement realize by means of equal (for each cut 3 and 4), 7 rotational symmetries symmetrically allocated concerning an axis, focalizing devices 5 and 6. Thus operating (elemental) apertures of focalizing devices 5 and 6 restrict in each cut 3 and 4, accordingly, to segments of the equal curvilinear arcs proportioned on cuts 3 and 4 with constant on angle (i.e., in an environing direction) a step. Differently from a wave field 1 select beams with equal cross sections, stretched in a direction from an axis 7 of rotational symmetry to a rim. And focusing the specified beams in such a manner that for any sets of the rays 2 selected on input (generated by the first gang of focusing elements 5) aperture 9 set of ring bands with centre on an axis 7 rotational symmetries, tangential to the selected rays 2 on any section of trajectory of a wave field 1 from input to output apertures 9 and 10, accordingly, (last of which is generated by the second gang of focalizing devices 5) form a set of coaxial hyperboloid of one sheets having, at least, one common caustic in the form of a ring (in concrete embodying on fig.1 ЯВЛЯЮЩЕГОСЯ the intermediate focal point 8). Thus, for security of a requirement of focusing in a point, the module and a direction of angles of deflection of rays mount such, that sagittal components of angles of deflection of resultant rays convert in null. Requirement of focusing can be also forming of the image of pointwise source (radiation source) in the form of some axisymmetric figure, for example, rings. In this case incomplete compensating of the mentioned sagittal component is supposed.

It is admissible focusing to realize with a constant module of an angle of deflection of rays 2 and 2' in each of mentioned cuts 3 and 4, accordingly. This requirement allows to use focusing elements 5 and 6 of any natures (i.e., refractiving, reflective, diffractional, waveguiding, etc.) with identity on all structure (i.e., to matching gang of focalizing devices)and properties. For example, it is possible to use a set from focusing elements 5 and 6 in the form of mirrors with multilayer coatings of equal thickness.

Also it is possible to focusing with a constant phase delay of the beams between the selected sections.

Also it is possible to focusing with a constant nonzero phase delay of the beams between the selected sections, forming in space between sections the intermediate focal point of the ring shape with a centre on the rotational symmetry axes, so, that the acting apertures of focusing elements of the first and second selected sections are optically mapped against each other by means of the additional ordered sets of the focusing elements, located near to the intermediate focal point and coordinates of rays in the first and second sections are satisfied a requirement:

$$(\rho_{1/R1})\,2 + (\rho_{2/R2})\,2 = 1,$$

where:

$\rho_1$ and $\rho_2$ — polar coordinates of rays in the first and second sections, accordingly;
R1 and R2 - radiuses of the input and output apertures in the first and second sections, accordingly.

As a rule, practically all known tools used in a X-ray band and methods of focusing do not ensure inphase addition of the radiation transiting through various areas of the apertures. Elimination is Fresnel lenses and make that, only for the certain lengths of waves. Accoding to claim 4 formulas of the invention the common path length of any ray from a sourse of a wave field up to image S 1 will be constant (in a paraxial approximation). Hence, all rays develop in a phase irrespective of a wave length of emanation. The image of the diffractional quality is as a result gained, and geometrical sizes of a focal point become commensurable with a wave length of focusing radiation.

Reasonably in the field of the intermediate focal point 8 to transduce amplitude and-or a phase, and-or frequency, and-or the nature of a undular field 1.

In the latter case (with a view of dilation of field of use) expediently beforehand to focalize a undular field 1 on a reflective surface (on drafts conventionally it is not shown), perpendicular to a direction of its extending and then to realize focusing a mirror component of a reflected beam by a declared mode with coefficient of longitudinal magnification equal $0.5\omega_1/\omega_2$ (where «$\omega_1$ "and"$\omega_2$» matching frequencies before the mentioned transformation). Thus it is necessary to guide a focalized undular field 1 on the specified smooth surface in a direction of its initial extending. The given alternative of embodying of a mode of focusing of a undular field ensures improvement of quality of focusing on a moving surface that is useful, for example, at writing-reading of the information, preferentially, in the field of X-ray photolithography.

in more detail the substance of the stated mode of focusing of a undular field uncovers below on an instance of operation of the arrangement for its embodying.

The arrangement for embodying a mode of focusing of a undular field 1 (oscillated by a certain radiation source) includes, at least, two, mounted sequentially one after another on a course of the undular field 1, the ranked gang from equal number of focalizing devices 5 and 6. The ranked gangs of focalizing devices 5 and 6 form the operating (elemental) apertures entering and output apertures 9 and 10, accordingly, possessing properties of a rotational symmetry concerning an axis 7 rotational symmetries. Each of the specified gangs is generated from equal focalizing devices 5 and 6 which are symmetrically allocated concerning an axis 7 rotational symmetries and uniformly (with a constant step on an angle), are proportioned under entering and output apertures 9 and 10, accordingly. Operating (elemental) apertures of focalizing devices 5 and 6 are restricted by segments of equal curvilinear arcs which shape is set from a requirement of security of proportionality of the meridional component of an angle of deflection transiting through the certain section of the mentioned operating (elemental) aperture of 1 rays selected from a undular field to 2 and 21 distance $p$ and $\rho 1$ from the specified section up to centre of the matching aperture 9 and 10.

differently, entering and output apertures 9 and 10, accordingly, are generated in such a manner that for any gang of rays 2 (9 set of ring bands selected on an entrance aperture with centre on an axis 7 rotational symmetries even in that case when the medium in space between apertures 9 and 10 has variable refractive index on radius) tangents to the selected rays 2 on any section of trajectory of a undular field 1 from entering up to output apertures 9 and 10, accordingly, form a set of the coaxial hyperboloid of one sheets having, at least, one common intake (caustic) in the form of a ring (functionally being the intermediate focal point 8). For security of the specified properties each of the mentioned apertures 9 and 10 is generated from a gang of curvilinear focalizing devices identical on the shape 5 and 6, accordingly. On $_\phi$$^{И}$Г.1 the shape of one of devices 5 matches to arc AiBiCiDi, and the shape of one of devices 6 matches to arc $_{Ai1Bi1Ci1Di1}$, stretched in a direction from an axis 7 rotational symmetries to a rim. The amount of the mentioned focalizing devices 5 in the aperture 9 matches to an amount of analogous devices 6 in the aperture 10.

The specified gangs of focalizing devices 5 and 6 can be fulfilled from refractiving focusing elements, from waveguiding focusing elements, from reflecting focusing elements or from the diffractional focusing elements, with restriction of their operating apertures by matching pairs of equal arcs.

Optimum that operating (elemental) apertures of focalizing devices 5 and 6 have been restricted by arcs $_{AiBiCiDi}$ $_{Ai1Bi1Ci1Di1}$ of rounds 11 and 12, accordingly, centres $_{O2}$ and $_{O3}$ which are drifted from an axis 7 rotational symmetries in the same direction, as focalizing devices 5 and 6, on a constant r, equal to radius of these arcs.

In the latter case expediently mentioned operating apertures of focalizing devices 5 and 6 to restrict to matching arcs which are coaxial to focalizing devices 5 and 6.

Operation of the arrangement for embodying the stated mode of focusing of a wave field from the physical point of view consists in the following.

From a wave field 1 (oscillated by a certain radiation source) select rays 2 and decline these rays 2 on the focusing set from a requirement angles. The mentioned allotment of rays 2 realize, at least, in two, following one after another cuts 3 and 4 wave fields 1, by means of the ranked gangs from equal number of focalizing devices 5 and 6, allocated in specified cuts 3 and 4, accordingly, with security of an invariance (i.e., a rotational symmetry) concerning a rotation about an axis 7 rotational symmetries, transiting through centers About and O1 mentioned cuts 3 and 4. The above-stated ranked gangs of focalizing devices 5 both 6 form entering and output apertures 9 and 10, accordingly, an optical system. Thus, in each above-stated cut 3 and 4 concordantly change the module and a direction of an angle of deflection of rays 2 and 21, accordingly, ensuring proportionality of their meridional components to distances $\rho_i$ and $\rho_{i1}$ From rays 2 and 21 up to centers About and O1 these cuts 3 and 4, accordingly. The given requirement realize by means of equal (for each cut 3 and 4), 7 rotational symmetries symmetrically allocated concerning an axis, focalizing devices 5 and 6. Thus operating (elemental) apertures of focalizing devices 5 and 6 restrict in each cut 3 and 4, accordingly, to segments of the equal curvilinear arcs proportioned on cuts 3 and 4 with constant on angle (i.e., in an environing direction) a step. Differently, from a wave field 1 select beams with equal cross sections, stretched in a direction from an axis 7 rotational symmetries to a rim. And focalize the specified beams in such a manner that for any gang of the rays 2 selected on entering (generated by the first gang of focalizing devices 5) the aperture 9 set of ring bands with centre on an axis 7 rotational symmetries, tangential to the selected rays 2 on any section of trajectory of a wave field 1 from entering up to output apertures 9 and 10, accordingly, (last of which is generated by the second gang of focalizing devices 5) form a set of coaxial hyperboloid of one sheets having, at least, one common intake (caustic) in the form of a ring (functionally being the intermediate focal point 8).

Above mentioned focusing elements 5 and 6 (the elemental apertures) can have, for example, the shape of segments of spirals or rings and form in aggregate matching entering and output apertures 9 and 10, possessing property of a rotational symmetry concerning an axis 7 rotational symmetries. The basic new quality in the stated plant is that each of apertures 9 and 10 is generated from of the same type (i.e., interchangeable in each aperture 9 and 10) focalizing devices 5 and 6, accordingly. On each of focalizing devices 5 entrance apertures 9 mentioned selected rays 2 decline on matching (the focusing of a wave field set from a requirement 1) angles and then, by means of a similar gang of devices 10 (forming an exit aperture 7) are again conversed to a wave converging in some point «S1». The singularity of the stated optical system consists that during focusing on entering and output apertures 9 and 10, accordingly, the deflection of rays goes not only in the meridional plane (as in known of a level of technique optical systems of the same assigning), but also in a sagittal plane (that is, there is a certain tangential component). However the stated optical system (the arrangement realizing a mode of focusing of a wave field) it is configured in such a manner that those components of deflection which happen in the meridional plane develop (are added), and matching components of deflection which happen in a sagittal plane are crossly cancelled. Thus the wave field oscillated by a radiation source 1 is conversed in such a manner that if on an input terminal we have a spherical wave in gap between entering and output apertures 9 and 10, accordingly, we already gain a gang of certain bundle of rays in the form of hyperboloid of one sheets. That is, each ray of a matching beam if to consider its space standing concerning any meridional plane, will decline this plane under the certain angle. And if to take, we shall admit, ring cut on an entrance aperture 9 for all these rays the angle of deflection in a tangential direction will be equal. Thus between apertures 9 and 10 we shall have a gang of certain rays, which are spread on a surface of a matching hyperboloid of one sheet with formation of an intake (a caustic, being the intermediate focal point 8) in the certain band then again start to miss. And, if the optical system is builted so, that considered rays have a common intake (a caustic, T.e the population of the elemental focal points for each section of the device 5 limited by matching ring cut on an entrance aperture 9) for entering and an exit aperture 9 and 10, accordingly, those and will be realized the full compensating of tangential (sagittal) components of a deflection of rays.

thus two alternatives are possible: when the mentioned intake (i.e., the intermediate focal point 8 ring shape) spatially is arranged between apertures 9 and 10 and when the mentioned intake spatially is arranged outside apertures 9 and 10. In the first case when the intake is arranged between apertures 9 and 10 some are possible additional (uncovered below) effects in a considered optical system. In the second case when the intake is arranged outside apertures 9 and 10 it is necessary the mentioned apertures 9 and 10 to allocate as it is possible more close one to another. In this case the optical system will work most effectively and with minimum lapses.

for first from considered cases there is a possibility to allocate in a band of an intake the certain additional known techniques from a level optical devices (for example, tools for transformation of a wave length of emanation, down to a modification of the nature of this emanation, resort for control of a phase of a wave, etc.) . In this case in a band of an intake it is necessary to allocate secondary members (on a ring) which amount is equal to an amount of the mentioned focalizing devices 5 and 6 each of apertures 9 and 10, accordingly, and the order of their location on ambit of an intake should match to the order of location of the mentioned devices 5 and 6 in apertures 9 and 10, accordingly. In this case the optical system allows to work effectively in some limited field of view. However, it is necessary to consider, that at a disposition in a band of an intake (the intermediate focal point 8) the additional optical devices, the system organized by them should possess property of a rotational symmetry concerning a matching axis 7 rotational symmetries, and each of additional optical devices making these system should have an expansion from an axis 7 rotational symmetries of considered system to its rim.

In that case when the mentioned intake (the intermediate focal point 8) is arranged outside apertures 9 and 10, these apertures 9 and 10 should be arranged close enough one to another due to what the stationary value is automatically ensured, close to null a phase delay.

In case of when the mentioned intake (the intermediate focal point 7) is arranged between apertures 9 and 10 too it is possible to gain a series of structures for which the phase delay is magnitude of a stationary value. Such systems always shape the real source image of emanation in the certain scale defined in parameters of an optical system and distance up to a radiant. The given effect can be used, for example, for an autofocusing in systems of writing - reading of the optical information at one-sided access to an effective area of an optical data carrier.

one of worthy alternatives of build-up of an optical system (arrangement) for embodying a patented mode, is the alternative when we gain for any 9 rays impinging on an entrance aperture constant modulo angles of their falling and a deflection. It was possibly to realize, for example, in the event that all focalizing devices 5 (the elemental apertures) an entrance aperture 9 are fulfilled in the form of arcs AiBiCiDi of rounds 11 centers $O_2$ which are drifted concerning an axis 7 on magnitude r, equal to radius of these rounds 11, and the radiation source and its image «S1» are near to an axis 7 rotational symmetries of an entrance aperture 9. In this case, if the intermediate focal point of focalizing devices of 5 and 6 apertures 9 and 10, accordingly, to allocate apart equal to diameter of these rounds 11 we shall gain earlier the mentioned effect of a deflexion of all entering rays under the same quite certain angle. In this case was possibly to realize an optical system, for example, at which on focalizing devices 5 (the elemental apertures) an entrance aperture 9 the multilayer coating (for example, for focusing rigid X-radiation) equal to all mentioned elemental apertures of thickness and from the same substances (as the angle of deflection for all elemental apertures has equal magnitude) is superimposed. That is from the technological point of view process of lamination coating will be identical for all focalizing devices 5 (the elemental apertures), that does the stated optical system (arrangement) for focusing a wave field quite comprehensible (from the technological and economic point of view) for large-scale manufacture and use in various fields of a science and a national economy. Besides in a considered case the mentioned focalizing devices 5 and 6 (the elemental apertures) can be fulfilled from equal and is equal ИЗОГНγТЫХ crystals.

Besides for embodying this alternative of a considered optical system focalizing devices 5 and 6 (the elemental apertures) can be fulfilled in the form of the waveguides ensuring a constant angle of deflection under the aperture of the considered optical system and with a constant time delay of emanation on a phase.

for embodying this alternative of a considered optical system focalizing devices 5 and 6 (the elemental apertures) can be fulfilled and in the form of the refractiving structures ensuring a uniform passage of an energy of an incident radiation on all square of an entrance aperture 3 as thickness of each focalizing device 5 will be a stationary value on all to its elemental aperture and signal attenuation also will be to stationary values.

the Side benefit of focalizing devices in the form of refractiving structures is also that the possibility of their use for focusing in a rigid X-ray band (an energy more than 10 кЭВ) for a wide band of lengths of waves, by virtue of magnification of a transparence of known substances is ensured. So, for example, under the offered plan the composite lens can be made of polycarbonate for a band from 20 кЭВ by thickness of 40 mm, in diameter 200 mm with a focal distance about 10 m. thus its weight will make all some kilogrammes.

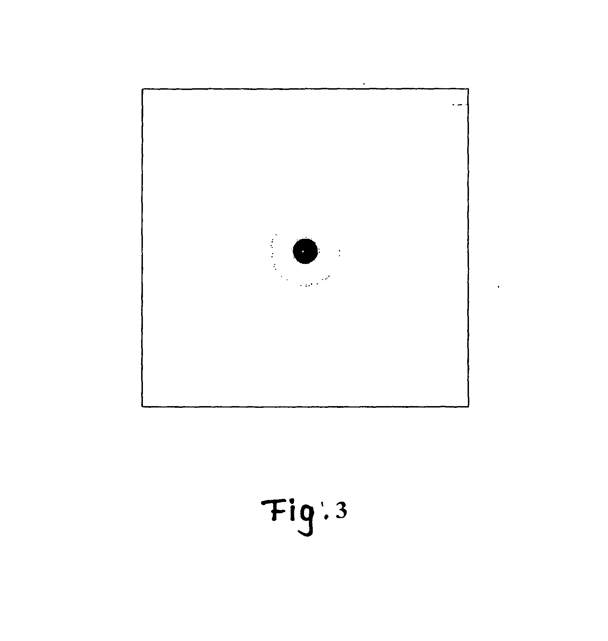

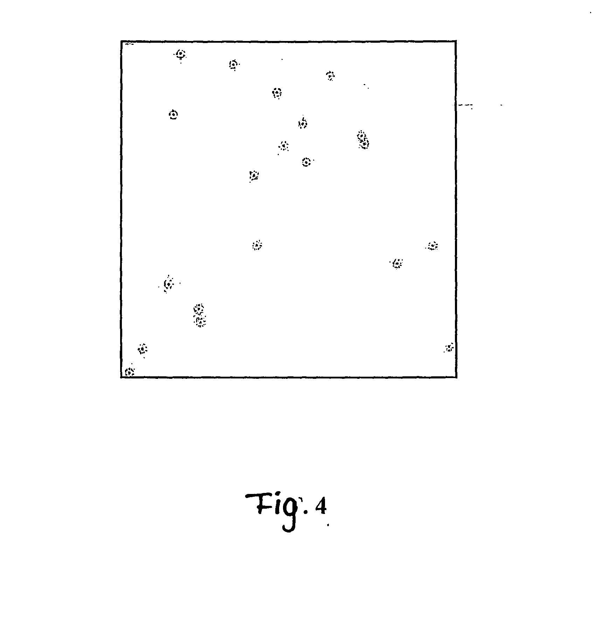

The Basic circuit of an optical system for numerical modeling the focuser on the basis of which calculation of shaped images (fig.3 is yielded and fig.4) various radiation sources is reduced on φИГ.5. It includes a radiation source in the form of the laser 13, a telescope 14, the shield 15 with pointwise pinholes, the collimator 16, the ring aperture 17, gangs of 18 focalizing devices 5 both 6 and the receiver of 19 images S 1 of a radiation source. Calculation is led for a lens with an angular aperture 1:50 (see above) on a wave length 1 A0. Images of a gang of point sources in a linear floor of an energy of 90 mm it is reduced on φИГ.4.

Thus, the stated mode of focusing of a undular field and the arrangement for its embodying can be widely used in various fields of a science and technique where it is necessary to ensure focusing of an electromagnetic radiation of any nature and a spectrum which is spread on various physical media, including vacuum (including, ultrasonic waves and a X-ray), with the most preferable use for focusing a rigid X-ray, for example, by means of X-ray telescopes that confirms correspondence of the stated invention to a requirement of patentability « industrial applicability ».

## Claims

1.    The method of a wave field focusing, conforming to which, beams, extracted from a wave field (emitted by a certain radiation source) are deflected at predetermined angles, at least in two sequential sections of the wave field by means of ordered sets consisting of equal number of similar focusing elements which are symmetrically disposed in said sections in such a way that an invariance is obtained in relation to the rotation around an axis which passes through the centres of the sections, **wherein** that in each above-stated sections the module and the orientation of the deflection angle of the beams are consistently modified, thereby ensuring the proportionality of a meridional component with respect to a distance between the beam and the centre of the sections by means of identical focusing elements and its acting apertures are limited by segments of arc, distributed along the sections with a constant angular pitch.

2.    The method of claim 1, **wherein** the deflection angle of the beams in each above-stated sections has a constant module.

3.    The method of claim 1, **wherein** realized a constant phase delay of the beams between the above-stated sections.

4.    The method of claim 3, **wherein** realized a constant nonzero phase delay of the beams between the selected sections, forming in space between sections the intermediate focal point of the ring shape with a centre on the rotational symmetry axes, so, that the acting apertures of focusing elements of the first and second selected sections are optically mapped against each other by means of the additional ordered sets of the focusing elements, located near to the intermediate focal point and coordinates of rays in the first and second sections are satisfied a requirement:

$$(\rho_{1/R1})\,2 + (\rho_{2/R2})\,2 = 1,$$

where:

$\rho_1$ and $\rho_2$ — polar coordinates of rays in the first and second sections, accordingly;

R1 and R2 - radiuses of the input and output apertures in the first and second sections, accordingly.

5. The method of claim 4, **wherein** in the field of the intermediate focal point converse amplitude and-or a phase, and-or frequency, and-or the nature of a wave field.

6. The method of claim 5, **wherein** expediently beforehand to focusing the wave field on a reflective surface, perpendicular to a direction of its travelling, and then to realize focusing a mirrored component of a reflected beam by a declared method with a longitudinal magnification equal to 0.5 $\omega_1/\omega_2$ (where "$\omega_1$ and $\omega_2$" are radiation frequencies before the mentioned transformation), thus the focusing wave field on the specified smooth surface in a direction of its initial travelling is necessary to guide matching frequencies

7. The wave field focusing device, containing at least two ordered sets of equal number of the similar focusing elements, which are symmetrically disposed in said sets and form by its acting subapertures input and output apertures in such a way that an invariance is obtained in relation to the rotation around an axis which passes through the centres of the apertures, **wherein** each of the specified sets is generated of the identical focusing elements, distributed along the specified apertures with a constant angular pitch and its acting subapertures are limited by segments of arc, configured with the condition that the meridional component of the deflection angle of the beams extracted from the wave field by local area of acting subaperture is proportional to a distance between the beam and the centre of the matching aperture.

8. The device of claim 7, **wherein** the specified sets of focusing elements are fulfilled from refractive focusing elements.

9. The device of claim 7, **wherein** the specified sets of focusing elements are fulfilled from waveguide focusing elements.

10. The device of claim 7, **wherein** the specified sets of focusing elements are fulfilled from reflecting focusing elements.

11. The device of claim 7, **wherein** the specified sets of focusing elements are fulfilled from diffractive focusing elements.

12. The device on any of items 8, 9, 10, 11, **wherein** acting subapertures of the focusing elements to restrict to arcs of circles which centres are drifted from an axis of a rotational symmetry in the same direction, as focusing elements, on a constant, equal to radius of these arcs.

13. The device of claim 12, **wherein** operating apertures of focalizing devices are restricted by arcs, coaxial to focusing elements.

Fig. 1

Fig. 2

Fig. 3

Fig. 4

13    14    15    16    17    18              19

Fig . 5

## INTERNATIONAL SEARCH REPORT

| International application No. |
|---|
| PCT/RU 03/00038 |

**A. CLASSIFICATION OF SUBJECT MATTER**

G02B 27/42, G21K 1/00

According to International Patent Classification (IPC) or to both national classification and IPC

**B. FIELDS SEARCHED**

Minimum documentation searched (classification system followed by classification symbols)

G02B 3/00, 3/08, 3/10, 5/00, 5/08-5/13, 5/18, 6/00, 27/40-27/46, G06K 9/20, G21K 1/00, 1/06

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 6285737 B1 (EUV LLC) Sep. 4, 2001 <br> Figures 2A, 2B, the claims | 1, 7, 11 |
| A | | 2-6, 8-10, 12, 13 |
| Y | RU 2179336 C1 (OBSCHESTVO S OGRANICHENNOI OTVETSTVENNOSTYU "INSMAT TEKHNOLOGIYA") 10.02.2002 <br> Figure 4, the claims | 1, 7, 11 |
| A | | 2-6, 8-10, 12, 13 |
| A | RU 2179707 C1 (OBSCHESTVO S OGRANICHENNOI OTVETSTVENNOSTYU "INSMAT TEKHNOLOGIYA") 20.02.2002, figure 2, page 6, left column, lines 46-56 | 1-13 |
| A | US 6097856 A (WELCH ALLYN, INC.) Aug. 1, 2000, the claims | 1-13 |

☐ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 September 2003 (05.09.2003) | 18 September 2003 (18.09.2003) |

| Name and mailing address of the ISA/ <br><br> RU <br> Facsimile No. | Authorized officer <br><br><br> Telephone No. |
|---|---|

Form PCT/ISA/210 (second sheet) (July 1992)